# EUROPÄISCHE PATENTSCHRIFT

(11) **EP 0 603 558 B1**
(45) Veröffentlichungstag und Bekanntmachung des Hinweises auf die Patenterteilung: **02.05.1997**
(21) Anmeldenummer: 93118787.6
(22) Anmeldetag: 23.11.1993
(51) Int. Cl.: G04B 47/00, A44C 5/00, G02B 23/16

(54) **Fernglas und Fernglashalterung in Form eines Armbands**
Telescope and wriststrap telescope mount
Télescope et support de télescope en forme de bracelet

(30) Priorität: 23.12.1992 DE 4243850
(43) Veröffentlichungstag der Anmeldung: 29.06.1994
(73) Patentinhaber: Carl Zeiss, D-89520 Heidenheim (Brenz) (DE); CARL ZEISS-STIFTUNG HANDELND ALS CARL ZEISS, D-89518 Heidenheim (Brenz) (DE)
(72) Erfinder: Müller, Günter, D-81477 München (DE)

(56) Entgegenhaltungen:
- WO-A-89/05990
- CH-A- 313 393
- CH-A- 682 290
- GB-A- 2 226 661
- PATENT ABSTRACTS OF JAPAN vol. 8, no. 202 (P-300) 14. September 1984 & JP-A-59 087 419 (YAMAKOFU SOUGIYOU K K) 21. Mai 1984

## Beschreibung

Die Erfindung betrifft eine Vorrichtung, bestehend aus einem Fernglas und einer Fernglashalterung.

Ferngläser und Fernglashalterungen sind seit langem bekannt. Am bekanntesten und verbreitesten ist die Schlaufenhalterung an Ferngläsern, so daß die Ferngläser um den Hals getragen werden können.

Es sind auch Fernglashalterungen bekannt, um ein Fernglas am Kopf oder an einer Brille eines Fernglasbenutzers zu befestigen oder es am Arm baumeln zu lassen.

Die Bandbefestigung von Ferngläsern hat den Nachteil, daß sich das Fernglas bei schnellen Bewegungen unkontrolliert bewegen kann, so daß es zu einer Zerstörung des Fernglases kommen kann. Deshalb werden solche Ferngläser normaler Weise in einem Aufbewahrungsbehälter transportiert.

Die Befestigung am Kopf hat den Nachteil, daß dafür ein recht voluminöses Kopftragegestell notwendig ist; und die Befestigung an der Brille hat den Nachteil, daß ein relativ hohes Gewicht auf den Nasenrücken lastet.

Es ist die Aufgabe der Erfindung eine Vorrichtung aus einem Fernglas und einer Fernglashalterung zu schaffen, welche angenehm zu tragen und sofort einsatzbereit ist.

Diese Aufgabe wird erfindungsgemäß durch den kennzeichnenden Teil des ersten Patentanspruches gelöst.

Indem man das Fernglas an einem Armreif befestigt erreicht man zum einen eine angenehme Trageeigenschaft und zum anderen eine sofortige Einsatzbereitschaft des Fernglases. Dabei ist es wesentlich, daß das Fernglas insbesondere eine gewisse Längenausdehnung nicht überschreitet und daß das Fernglas durch den Armreif einen lagestabilen Halt erfährt.

Es ist vorteilhaft, wenn das Fernglas monokular ist. Dadurch läßt sich seine Breite gering halten. Zwar ist auch ein Einsatz von binokularen Ferngläsern denkbar, da diese heute nur eine zusammengefaltete Breite von ≈ 6-7 cm haben. Um sie aber wirklich binokular nutzen zu können müssen sie aber dann entfaltet werden.

Vorteilhaft ist es auch, wenn der Armreif nicht nur für das Fernglas sondern auch für eine Uhr verwendet wird.

Wenn das Fernglas in seiner größten Längenausdehnung tangential zum Armreifumfang orientiert wird, braucht man nur den Arm zu heben und kann damit das Fernglas leicht vor das Auge bewegen.

Wenn man eine lösbare Halterung verwendet, kann man das Fernglas auch an einen Dritten weitergeben, ohne den Armreif abnehmen zu müssen.

Andererseits hat eine feste Verbindung zwischen Fernglas und Armreif den Vorteil, daß das Fernglas nicht so leicht verloren gehen kann.

Reduziert man den größten Durchmesser auf unter 1,5 cm, so stört das Fernglas fast überhaupt nicht mehr am Arm des Trägers. Dazu trägt auch bei, wenn die Längenausdehnung des Fernglases kleiner als 7 cm ist. Diese Tragevorrichtung bzw. -einheit ergibt auch den Vorteil, daß das Fernglas z.B. unter dem Jacket-/Mantel-/Blouson-Ärmel "unsichtbar und geschützt" verschwinden kann. Für den schnellen Gebrauch ist nur der Arm zu strecken und das Fernglas ist sofort einsatzbereit. Diese Anordnung kennzeichnet auch die Vielseitigkeit der Anwendung für Herren, Damen, Kinder, Rechts- oder Links-Sehende und/oder Rechts- oder Links-Händer.

Der Armreif kann aus einem Band bestehen, welches aber mindestens 1 cm breit sein sollte, damit man das Gewicht des Fernglases nicht allzusehr merkt.

Dieses Band kann elastisch sein, um das Fernglas schnell am Arm befestigen oder vom Arm abnehmen zu können.

Ist an dem Armreif ein Verschluß, so kann man auch etwas unelastischere Bänder oder gänzlich unelastische Armreife verwenden.

Wenn man auf das Fernglas ein Aufsteckglas nach bekanntem Stand der Technik aufsteckt, so kann man dieses als Lupe verwenden.

Ist das Fernglas abnehmbar, so ist an ihm vorteilhafter Weise ein Fingerring befestigt. Damit kann man bei einer sitzenden Position des Fernglasbenutzers das Fernglas in eine für längere Betrachtungen angenehmere Trageposition bringen.

Die Erfindung wird nachstehend in beispielhafter Weise anhand von vier Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen:
- Figur 1: eine perspektivische Sicht der Vorrichtung an einer Hand;
- Figur 2: eine Aufsicht auf eine erfindungsgemäße Vorrichtung;
- Figur 3: eine seitliche Ansicht von Figur 2; und
- Figur 4: eine seitliche, um 90° gedrehte Ansicht von Figur 2.

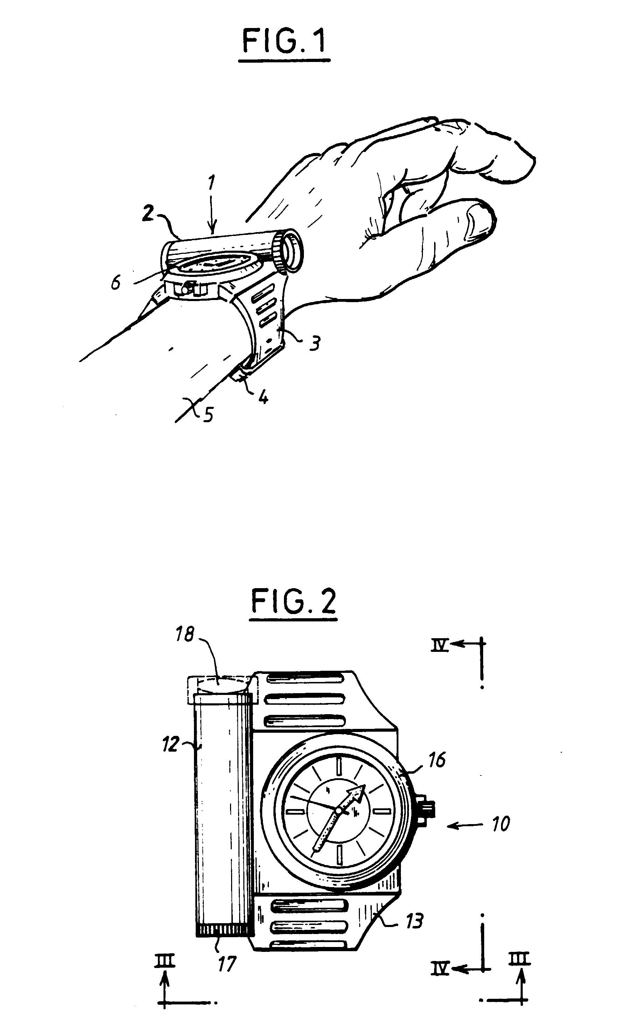

Die in Figur 1 dargestellte Vorrichtung (1) besteht im wesentlichen aus einem Fernglas (2) und einer Fernglashalterung (3), welche als Armreif bzw. Armband ausgeführt ist. Am Armreif bzw. Armband (3) befindet sich ein zu öffnender Verschluß (4), wie er für Uhrenarmbänder üblich ist.

Die Vorrichtung (1) wird im Normalfall an der linken Hand (5) getragen. Links vom Fernglas (2) befindet sich eine normale Armbanduhr (6), so daß das Fernglas (2) nach außen zur Hand hin angebracht ist.

Die in Figur 2 dargestellte Vorrichtung (10) unterscheidet sich von der in Figur 1 dargestellten Vorrichtung lediglich dadurch, daß sich hier die Uhr (16) rechts vom Fernglas (12) befindet. Das Fernglas (12) hat eine größte Längenausdehnung kleiner 6 cm und der Gesamtdurchmesser des Fernglases ist kleiner als 1,5 cm. Dies bedeutet für den Objektiv-Durchmesser, daß dieser nicht größer als 13 mm sein kann. Am Fernglas (12) befindet sich eine Scharfeinstelleinrichtung (17). Durch die Anbringung des Fernglases (12) und der Uhr (16) an nur einem Armreif bzw. Armband (13) hat man einen echten Doppel-Nutzen. Die Vorrichtung eignet sich insbesondere für alle Träger beim Auto-, Motorrad-, Rad- und Skifahren, sowie beim Wandern, Joggen, Bergsteigen, Reiten, bei Sport/Theater/Konzert, in der Schule und insbesondere in Hör- und Lehrsälen.

Die Leistungen des Fernglases liegen bei denen eines normalen Fernglases mit einer Vergrößerung zwischen 3- und 10-fach, möglichst um 5-fach.

Da die Scharfeinstellung variabel ist, wobei das Fernglas eine Schärfenkorrektur ab 1 m besitzt, kann es auch für den Nahbereich eingesetzt werden. Mit einem Aufsteckglas (18) kann es auch als Lupe verwendet werden.

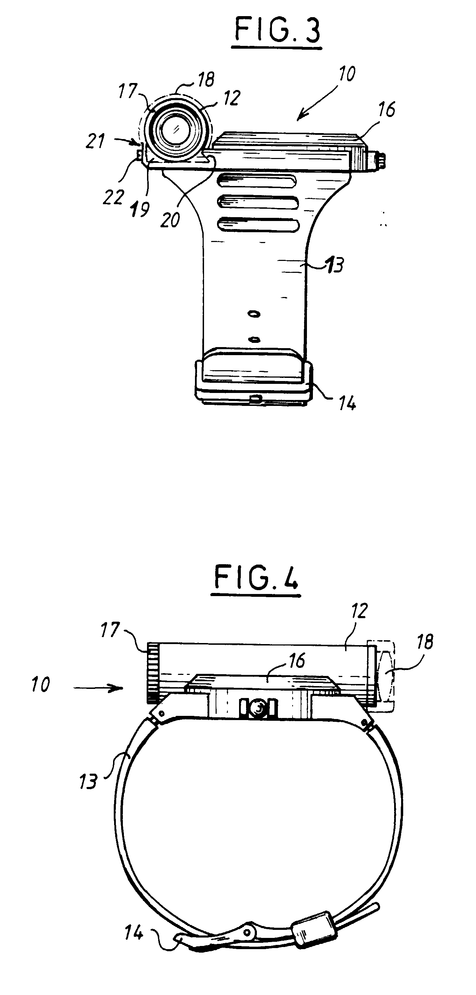

In Figur 3 ist die Vorrichtung (10) seitlich dargestellt, um zu zeigen, daß das Fernglas (12) nur gering über die Uhr (16) hinausragt. Durch den flexiblen Armreif (13) mit Verschluß (14) kann die Vorrichtung leicht an einem Arm befestigt bzw. abgenommen werden. Diese Tragevorrichtung bzw. -einheit ergibt auch den Vorteil, daß das Fernglas z.B. unter dem Jacket-/Mantel-/Blouson-Ärmel "unsichtbar und geschützt" verschwinden kann. Für den schnellen Gebrauch ist nur der Arm zu strecken und das Fernglas ist sofort einsatzbereit. Diese Anordnung kennzeichnet auch die Vielseitigkeit der Anwendung für Herren, Damen, Kinder, Rechts- oder Links-Sehende und/oder Rechts- oder Links-Händer.

Das Fernglas (12) hat an seinem unteren Bereich eine rechteckförmige Auflagefläche (19) mit einer seitlichen Wulst (20), welche in eine entsprechende Ausnehmung auf dem Armreif (13) greift. In dieser Ausnehmung ist die Wulst (20) fest verankert, da die Wulst (20) des Fernglases (12) von der anderen Seite (21) durch zwei Schrauben (22) in die Ausnehmung gedrückt wird.

In Figur 4 ist die Vorrichtung (10) nochmal in zur Figur 3 um 90° gedrehter Stellung dargestellt.

## Patentansprüche

1. Vorrichtung, bestehend aus einem Fernglas und einer Fernglashalterung, dadurch gekennzeichnet, daß die Längenausdehnung des Fernglases kleiner als 15 cm ist, daß die Fernglashalterung an einem Armreif angebracht ist, wobei die Halterung dem Fernglas einen lagestabilen Halt gewährt.

2. Vorrichtung nach Anspruch 1, dadurch gekennzeichnet, daß das Fernglas monokular ist.

3. Vorrichtung nach einem der Ansprüche 1-2, dadurch gekennzeichnet, daß an dem Armreif eine Uhr neben dem Fernglas angebracht ist.

4. Vorrichtung nach einem der Ansprüche 1-3, dadurch gekennzeichnet, daß das Fernglas so auf dem Armreif orientiert ist, daß seine größte Längenausdehnung tangential zum Armreifumfang orientiert ist.

5. Vorrichtung nach einem der Ansprüche 1-4, dadurch gekennzeichnet, daß die Halterung eine lösbare ist, so daß das Fernglas vom Armreif getrennt werden kann.

6. Vorrichtung nach einem der Ansprüche 1-4, dadurch gekennzeichnet, daß zwischen Fernglas und Armreif eine feste Verbindung besteht.

7. Vorrichtung nach einem der Ansprüche 1-6, dadurch gekennzeichnet, daß der größte Durchmesser des Fernglases kleiner als 1,5 cm ist.

8. Vorrichtung nach einem der Ansprüche 1-7, dadurch gekennzeichnet, daß die Längenausdehnung des Fernglases kleiner als 7 cm ist.

9. Vorrichtung nach einem der Ansprüche 1-8, dadurch gekennzeichnet, daß der Armreif aus einem mindestens 1 cm breitem Band besteht.

10. Vorrichtung nach Anspruch 9, dadurch gekennzeichnet, daß das Band elastisch ist.

11. Vorrichtung nach einem der Ansprüche 1-9, dadurch gekennzeichnet, daß der Armreif einen zu öffnenden Verschluß besitzt.

12. Vorrichtung nach einem der Ansprüche 1-11, dadurch gekennzeichnet, daß vor dem Fernglas ein Aufsteckglas angebracht ist, um eine Betrachtung in der Nähe in der Funktion einer Lupe zu ermöglichen.

13. Vorrichtung nach einem der Ansprüche 1-5, dadurch gekennzeichnet, daß an dem Fernglas ein Ring befestigt ist, welcher über einen Finger gezogen werden kann.

## Claims

1. Combination comprising a telescope and a telescope mounting characterized in that the telescope having a length dimension no larger than 15 cm, that the telescope mounting is attached to an arm-band, whereby the telescope mounting provide a positionally stable support for the telescope.

2. Combination according to claim 1, wherein said telescope is monocular.

3. Combination according to claim 1 or 2, wherein a watch attached to the arm-band next to the telescope.

4. Combination according to one of the claims 1 to 3, wherein the telescope is oriented on the arm-band such that the length dimension of the telescope is oriented tangentially to the band periphery.

5. Combination according to one of the claims 1 to 4, wherein the telescope mounting is releasable from said arm-band, so that the telescope is separable from said arm-band.

6. Combination according to one of the claims 1 to 4, wherein the telescope is fixedly connected to the arm-band.

7. Combination according to one of the claims 1 to 6, wherein the telescope has a diameter no larger than 1.5 cm.

8. Combination according to one of the claims 1 to 7, wherein the length of the telescope is no larger than 7 cm.

9. Combination according to one of the claims 1 to 8, wherein the arm-band is at least 1 cm wide.

10. Combination according to claim 9, wherein the arm-band is elastic.

11. Combination according to one of the claims 1 to 9, wherein the arm-band comprising closure means for opening and closing the arm-band.

12. Combination according to one of the claims 1 to 11, wherein a slip-on lens is attached at the front of the telescope to allow close-up observation in the function of a magnifying glass.

13. Combination according to one of the claims 1 to 5 wherein a finger ring is attached to the telescope, which could be used on a finger.

## Revendications

1. Dispositif constitué d'un système télescopique et de sa monture, caractérisé en ce que l'allongement du système est inférieur à 15 cm, que sa monture est fixée à un bracelet et qu'elle assure ainsi au système une assise stable.

2. Dispositif selon la revendication 1, caractérisé en ce que le système télescopique est monoculaire.

3. Dispositif selon l'une des revendications 1 ou 2, caractérisé en ce qu'une montre est disposée sur le bracelet à côté du système télescopique.

4. Dispositif selon l'une des revendications de 1 à 3, caractérisé en ce que le système télescopique est orienté sur le bracelet de manière à ce que son allongement maximal se fasse tangentiellement au pourtour du bracelet.

5. Dispositif selon l'une des revendications de 1 à 4, caractérisé en ce que la monture est détachable et permet donc de retirer le système télescopique du bracelet.

6. Dispositif selon l'une des revendications de 1 à 4, caractérisé en ce que le système télescopique est relié fixement au bracelet

7. Dispositif selon l'une des revendications de 1 à 6, caractérisé en ce que le diamètre maximal du système télescopique est inférieur à 1,5 cm.

8. Dispositif selon l'une des revendications de 1 à 7, caractérisé en ce que l'allongement du système télescopique est inférieur à 7 cm.

9. Dispositif selon l'une des revendications de 1 à 8, caractérisé en ce que le bracelet est formé d'une bande large de 1 cm au moins.

10. Dispositif selon la revendication 9, caractérisé en ce que la bande du bracelet est élastique.

11. Dispositif selon l'une des revendications de 1 à 9, caractérisé en ce que le bracelet possède une fermeture à ouvrir.

12. Dispositif selon l'une des revendications de 1 à 11, caractérisé en ce qu'un verre emboîtable est placé devant le système télescopique pour permettre une observation rapprochée, en fonctionnant alors comme une loupe.

13. Dispositif selon l'une des revendications de 1 à 5, caractérisé en ce qu'une bague est fixée au système télescopique et peut être enfilée sur un doigt.
